(19) Europäisches Patentamt / European Patent Office / Office européen des brevets

(11) **EP 4 139 630 B1**

(12) **EUROPEAN PATENT SPECIFICATION**

(45) Date of publication and mention
of the grant of the patent:
**27.11.2024  Bulletin 2024/48**

(21) Application number: **21921645.4**

(22) Date of filing: **07.07.2021**

(51) International Patent Classification (IPC):
**G01B 21/16** *(2006.01)*　　**G01B 11/24** *(2006.01)*
**B61K 9/08** *(2006.01)*　　**B66C 13/46** *(2006.01)*
**B66C 7/00** *(2006.01)*　　**B66C 15/00** *(2006.01)*

(52) Cooperative Patent Classification (CPC):
**B61K 9/08; B66C 7/00; B66C 13/46; B66C 15/00;
G01B 21/20;** G01B 2210/58

(86) International application number:
**PCT/TR2021/050691**

(87) International publication number:
**WO 2023/282859 (12.01.2023 Gazette 2023/02)**

(54) **CRANE RAIL MEASURING DEVICE**

KRANSCHIENENMESSVORRICHTUNG

DISPOSITIF DE MESURE DE RAIL DE GRUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023  Bulletin 2023/09**

(73) Proprietor: **Guralp Vinc Ve Makina Konstruksiyon
Sanayi Ve
Ticaret Anonim Sirketi
Izmir (TR)**

(72) Inventors:
• **KURTMEN, Erdem
Izmir (TR)**

• **NALBANT, Ugur
Izmir (TR)**

(74) Representative: **Yamankaradeniz, Kemal
Destek Patent Inc.
Maslak Mah.
Büyükdere Cad., No: 243
Kat: 13, Spine Tower, Sariyer
34485 Istanbul (TR)**

(56) References cited:
　**CN-A- 104 061 887　　JP-A- 2020 126 020
　JP-A- H05 264 261　　JP-A- H06 323 829
　JP-U- 3 222 202**

## Description

### Technical Field

The invention relates to a measuring device and a measuring method for crane rails.

The invention particularly relates to a rail measuring device designed to take rail measurements for systems operating on rails to work in a healthy and safe way, to control their compliance with standards, and to make quality control during the production phase.

### State of the Art

The crane rails are used to carry the loads in a steady and proper way with minimum energy consumption. In accordance with the function of the crane rails and for the safe use thereof, the rails must be in accordance with the determined measurement parameters and positioned with a proper layout. Accordingly, there are various types of measuring devices to make rail measurements, control the compliance thereof to the standards according to the measurements, and to make quality control of the rails.

Crane rails, which are widely used now, are located at high places where human access is not easy and may pose a risk in terms of safety. This has made it widespread that autonomous systems equipped with different types of sensors are preferred in rail measuring devices. Laser sensors are more preferred in autonomous measuring means. However, the use of laser sensors is not satisfactory in terms of cost, energy consumption, distance, and accuracy. Also, since laser sensors have two components which are receiver and transmitter, there must be a line of sight between these two components and this line can work effectively under certain ambient conditions. Additionally, the transmitter part requires an extra installation process.

Patents found in the literature related to the rail measuring devices are provided below.

TR2012/02998 relates to a system and method for detecting a mechanical stress in at least one portion of a rail. In said system, the mechanical stress of a rail is measured by detecting the ability of magnetization in the respective portion of the rail. The system is equipped with a magnetic field generator for generating a magnetic field induced in the area corresponding to the respective portion of the rail to be measured, and a measuring system for measuring the response of the rail to being exposed to the magnetic field.

TR2019/06716 discloses a rail measuring device. In said rail measuring device, at least one fiberoptic sensor is used to measure a mechanical variable acting on a rail with a neutral fiber travelling along with one of the lengths thereof. At least one fiberoptic sensor unit is ensured at an angle of 30° to 60°, in parti cular 45° with respect to the neutral fiber, or at an angle of -30° to -60°, particularly -45°, with respect to the neutral fiber. The fiber optic sensor associated with the device generates a signal light by reflection or transmission on the rail, and the measurement is performed by evaluating this signal.

US20211088407 (A1) relates to a system and method for performing non-contact four-dimensional measurement of an overhead crane rail system in a crane section or a crane bridge beam. In said system, the beam alignment of the crane and/or the measurement and alignment of the crane rail is controlled and regulated by using a 3D laser scanner.

KR20140131183 (A) relates to an apparatus and method for measuring the uniformity of the movement of overhead crane runway rails. The said apparatus comprises a measuring device mounted along the runway rail, a laser light wave machine sensing said measuring device and coordinates X, Y, Z, and a control unit that identifies the uniformity of the movement of the rail by using the coordinates X, Y, Z. The measuring device consists of a body, a plurality of balls located on the body facing the rail so that the body can move along the runway rail, and a prism located at the top of the body.

CN103063146 (A) relates to a measurement sensing system for crane rail. The measurement sensing system consists of a personal computer (PC) terminal, a small trolley for moving on the rail, a laser receiver screen, a camera, a cabinet overhead controller, a distance measuring device, and a power source. The laser receiver screen facing the laser gun is a translucent screen perpendicular to the beam emitted by the laser gun. The camera is located on the back part of the laser receiver screen. The coordinates of the beam reflected from the laser are recorded for different distances and positions of the rail. From these recorded positions, the height deviation, the clearance of the left and right rails, the level deviation, etc. are detected and a graph thereof is made.

JPH03177289 (A) relates to an inspection device for an overhead crane. The rail inspection device is guided by sliding on the runway rail. During this guiding, a continuous photograph of the rail surface is taken with an image sensor, and the deflection of the rail joint and the gap size are automatically calculated. Also with an image processing device, the data such as the angle of deviation in the direction of rotation and etc. are automatically calculated by using the photographs taken at intervals with the image sensors.

JP2008224419 (A) relates to a measuring method for the overhead crane rails. In the said measurement method, the slope differences of the right and left movement rails, on which the crane moves, are determined relative to each other. In this context, the clinometers are mounted on saddles on both sides of the overhead crane and the overhead crane is moved on the runway rails of the overhead crane. Then, the difference in slope between the left and right rails is detected from the change in the tilt angle of each saddle. When the difference detected in the slope of the rails exceeds an acceptable value, the rails are repaired. JP H05 264261 A discloses the preamble of claim 1. It also discloses a method of using a rail measuring device.

As a result, due to the abovementioned disadvantages and the insufficiency of the current solutions regarding the subject matter, development is required to be made in the relevant technical field.

## Summary of the Invention

The present invention relates to a rail measuring device and a corresponding measuring method designed for crane rails that meet the above-mentioned requirements, eliminate all disadvantages and bring some additional advantages.

The primary object of the invention is to provide a rail measuring device that performs high accuracy measurement with high and constant resolution.

An object of the invention is to provide a single-piece rail measuring device that enables measurements to be taken at any location without range and line of sight limit.

Another object of the invention is to provide a low-cost rail measuring device compared to its equivalents.

In order to achieve the abovementioned objects, the invention relates to a crane rail measuring device for detecting the irregular heights and lateral shifts in the rails by being moved on the crane rail with energy provided by a power source and drive from an electric motor, characterized by comprising, at least one angle sensor that detects the angle change of the rail, an encoder to measure how far the rail measuring device has traveled on the rail and to receive the displacement data, and a microprocessor that controls the data from the sensors by controlling the rail measuring device.

In order to achieve the objectives of the invention, the rail measuring device includes an object sensor that enables the rail measuring device to be stopped when there is an undesired object on the rail.

In order to achieve the objectives of the invention, said microprocessor includes an acceleration sensor to detect the initial angle of the rail.

In order to achieve the objectives of the invention, it includes a USB or Wi-Fi module for transferring the angle values and distance traveled information detected by the encoder and microprocessor to the external environment.

In order to achieve the objectives of the invention, the said angle sensor is a tilt sensor or an IMU sensor.

In order to achieve the objectives of the invention, the said power source is preferably a Li-Ion battery.

In order to achieve the objectives of the invention, the said electric motor is preferably a DC motor.

The invention also relates to a crane rail measuring method for detecting the irregular heights and lateral shifts in the rails by being moved on the crane rail with energy provided by a power source and drive from an electric motor. Accordingly, the said measuring method includes the following steps.

a) Entering the number of measurements and measuring frequency data to the rail measuring device via buttons through a control panel,

b) Entering the number and frequency of measurements from the computer environment to the rail measuring device by means of the Wi-Fi module,

c) detecting the crane rail angle change with an angle sensor,

d) detecting the distance traveled on the crane rail by means of an encoder,

e) transferring the angle data and distance traveled information to USB via a USB connection,

f) transferring the angle data and distance traveled information to the computer environment via a Wi-Fi module,

g) processing the data written on USB or transferred via Wi-Fi according to a mathematical model to calculate the height change and lateral change values.

If an acceleration sensor located in a microprocessor and an IMU sensor as an angle sensor are used in order to achieve the objectives of the method of the invention, the first angle data on the rail is detected with the acceleration sensor on the IMU.

In order to achieve the objectives of the method of the invention, the said angle sensor is preferably measured with a maximum accuracy of 0.02 mm.

The structural and characteristic features of the present invention will be understood clearly by the following drawings and the detailed description made with reference to these drawings and therefore the evaluation shall be made by taking these figures and the detailed description into consideration.

**Figures for a Better Understanding of the Invention**

Figure 1 is the general perspective view of the rail measuring device according to the invention.

Figure 2 is a side view of the rail measuring device according to the invention.

Figure 3 is a top view of the rail measuring device according to the invention

The drawings are not necessarily drawn to scale and details which are not necessary for the understanding of the present invention may be omitted. In addition, elements that are substantially identical or have substantially identical functions are denoted by the same reference signs.

**Description of the References**

10 Rail Measuring Device

11 Table

111 Guide Wheel

112 Contact Wheel

12 Control Panel

121 LCD screen

122 Button

13 Electric Motor

14 Power Source

15 Encoder

16 Microprocessor

17 Angle Sensor

18 Object Sensor

19 USB Connection

20 Wi-Fi Module

**Detailed Description of the Invention**

In this detailed description, crane rail measuring device (10) of the invention is described only for clarifying the subject matter in a manner such that no limiting effect is created.

4

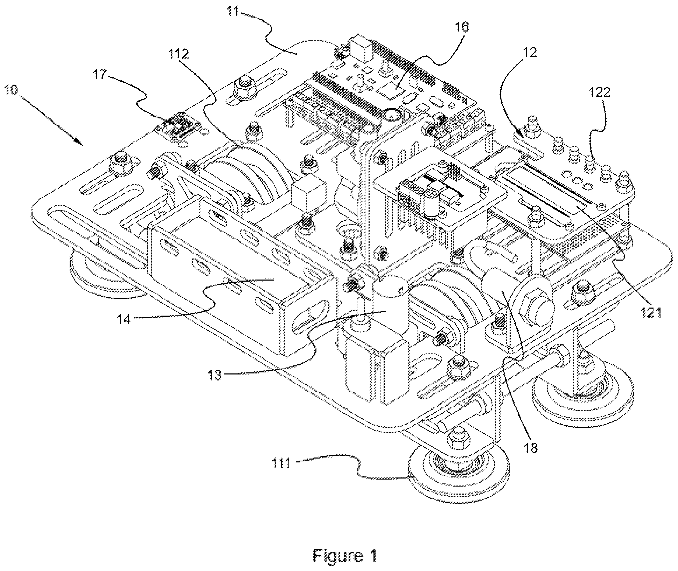

The rail measuring device (10) of the invention is used to control the suitability of the crane rails to the measurement standards determined for use thereof safely and in accordance with their function and to provide quality control. The rail measuring device (10), the general view of which is given in Figure 1, basically consists of a table (11), measurement elements provided on the said table (11) and control units.

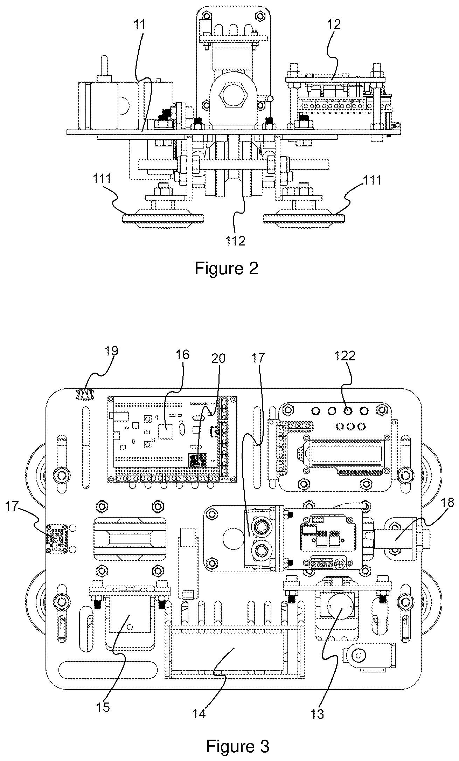

As can be seen from Figure 2, there are guide wheels (111) connected under the table (11) and contact wheels (112) provided on the table (11). The said guide wheels (111) enable that the rail measuring device (10) is guided on the rail by being seated on the edges of the crane rails. Said contact wheels (112) in turn provide the connection between the crane rail and the rail measuring device (10).

A control panel (12), an electric motor (13), and a power source (14) are provided on table (11) to enable the rail measuring device (10) to be operated and controlled. Said control panel (12) includes an LCD screen (121) and buttons (122). The said LCD screen (121) is the interface of the rail measuring device (10) and provides the data to be displayed by being controlled. Also, by means of a Wi-Fi module (20) located thereon, the interface can be seen from the computer environment and the system parameters can be input via the computer. The said buttons (122) are used for enabling the user to set the measurement parameters. The movement of the rail measuring device (10) on the rail is provided by the said electric motor (13). The said power source (14) is the configuration in which the rail measuring device (10) meets all its power. Li-Ion battery is preferably used as the power source (14).

The measurement elements located in the rail measuring device (10) can be seen in detail in Figure 3. Corresponding measurement elements consist of an encoder (15), a microprocessor (16), an angle sensor (17), and an object sensor (18) provided on table (11). The said encoder (15) is used to measure how far the rail measuring device (10) has traveled on the rail and to receive the displacement data. Irregular heights and lateral shifts on the rails are detected by means of the said angle sensor (17). The angle sensor can be selected as a tilt sensor or an IMU sensor with DMP (Digital Motion Processor) property. Preferably, IFM brand and JN2101 model sensors are used as tilt sensors. Bosch brand and BNO055 model sensor is preferably used as IMU sensor. The said object sensor (18) provides that the rail measuring device (10) is stopped when there is an undesired object on the rail. The said microprocessor (16) contains an acceleration sensor in its structure and detects the first angle of the rail by means of this acceleration sensor and angle sensor (17). The microprocessor (16) controls the rail measuring device (10) and is used to verify the initial angle data and the data from the angle sensor (17). A microprocessor (16) of the STM32 type is preferably used in the rail measuring device (10).

When the rail measuring device (10) is first switched on, the user first inputs the measurement amount (how many measurements will be taken) and the measurement frequency value (how many mm intervals the measurement will be made) into the system via the buttons (122) on the control panel (12) or by means of the Wi-Fi module (20) on a computer. Inputting the measurement frequency value high increases the accuracy of the measurements made. For example, when the measurement is made by an angle sensor (17) with a resolution of 0.01 degrees and an encoder (15) giving 800 ticks at 100 mm intervals, the accuracy becomes 0.02 mm.

The angle sensor (17) regards the angle value of the rail measuring device (10) as 0 degrees prior to the operation. Each angle change that occurs after the device starts to operate is also read by the angle sensor (17). The movement of the rail measuring device (10) on the rail takes place as much as the measurement frequency. Electric motor (13) ensures that the device moves to the targeted point on the rail. The distance traveled is detected by the encoder (15). The accuracy of the movement varies according to the diameter of the contact wheel (112) and the resolution of the encoder (15). When the targeted point is reached, the angle value is read by the microprocessor (16) and the angle sensor (17). The rail measuring device (10) continues the measurement process until the targeted amount of measurements is reached and stops when the target is reached.

A USB inserted into a USB connector (19) is used to retrieve data from the rail measuring device (10). Also, the data is transferred to the computer environment via the Wi-Fi module (20). Angle values and distance traveled information are written into USB in TXT format. The data received from USB or transferred to the computer via Wi-Fi are converted into the height and lateral change data of the rail by means of a mathematical model. The mathematical model used accordingly is provided below.

**Height Change** = *Distance Travelled* $\times \sin(\alpha$ at the previous point - $\alpha$ at the present point)

**Lateral Change** = *Distance Travelled* $\times \sin(\beta$ at the previous point - $\beta$ at the present point)

*Distance travelled* = Encoder tick count / 800 × 68 × π

α = Vertical angle

β = Horizontal angle

The rail measuring device of the invention can perform measurements with at least 50 times higher resolution than its equivalents, without range and line of sight limits. With the angle sensor used, the measurements of high accuracy can be performed, preferably up to a maximum of 0.02 mm. Also, the angle sensor (17) is much cheaper than its equivalents and the related production costs of the device are lower. With the angle sensors (17) used, measurements can be performed using low energy, and up to 5 times lower energy consumption than its equivalents.

Trial tests were carried out to ensure that the rail measuring device (10) is tested and calibrated. Trial tests were performed on a test rail. Said test rail was composed of 11 m long 50× 50 mm square rail. The position data of the rail was detected by first making measurements with a coordinate measuring machine on the test rail. The graph showing the position data of the rail is shown in Graph 1 below.

**Graph 1.** Position data of the test rail

After determining the position data of the test rail, the rail measuring device (10) is positioned at the beginning of the test rail. For the trial test, the number of measurements is 100 and the measurement frequency is 100 mm. The rail measuring device (10) is 350 mm long. Therefore, when positioned on the rail, the length of 175 mm from the beginning of the rail is not included in the measurement. Also, the rail measuring device (10) takes the first measurement value after it has moved 75 mm on the rail upon being fully seated on the rail. Thus, the first measuring point is 250 mm from the starting point of the rail. The measurement results performed with the rail measuring device (10) as well as the position data thereof are shown in Graphic 2 below.

Difference of Levels

**Graph 2.** Measurement results of the test rail

As a result of the measurement, the maximum error was measured as 0.33 mm and the average error was measured as 0.18 mm. The angle accuracy read when the measurement was performed was +- 0.1 degrees. In this case, the expected measurement accuracy was determined as 100xsin(0.2) = 0.35 mm. The standard deviation of the errors was obtained as 0.0786. These results showed that the position of the rail can be detected based on the angle change by means of the rail measuring device (10), and the mathematical model used for detecting the rail position is capable of providing this.

**Claims**

1. A crane rail measuring device (10) for detecting the irregular heights and lateral shifts in the rails by being moved on the crane rail with energy provided by a power source (14) and drive from an electric motor (13), **characterized by comprising;** at least one angle sensor (17) that detects the angle change of the rail, an encoder (15) to measure how far the rail measuring device (10) has traveled on the rail and to receive the displacement data, and a microprocessor (16) that controls the data from the sensors by controlling the rail measuring device (10).

2. The rail measuring device (10) according to claim 1, **characterized by comprising;** an object sensor (18) that enables the rail measuring device (10) to be stopped when there is an undesired object on the rail.

3. The rail measuring device (10) according to claim 1, **characterized in that** the said microprocessor (16) comprises an acceleration sensor for detecting the first angle of the rail.

4. The rail measuring device (10) according to claim 1, **characterized by comprising;** a USB connection (19) for transferring the angle values and distance traveled information detected by the said angle sensor (17), encoder (15) and microprocessor (16) to the external environment.

5. The rail measuring device (10) according to claim 1, **characterized by comprising;** a Wi-Fi module (21) for transferring the angle values and distance traveled information detected by the said angle sensor (17), encoder (15) and microprocessor (16) to the external environment.

6. The rail measuring device (10) according to claim 1, **characterized in that** the said angle sensor (17) is a tilt sensor or an IMU sensor.

**7.** The rail measuring device (10) according to claim 1, **characterized in that** the said power source (14) is preferably a Li-Ion battery.

**8.** The rail measuring device (10) according to claim 1, **characterized in that** the said electric motor (13) is preferably a DC motor.

**9.** The crane rail measuring method for detecting the irregular heights and lateral shifts in the rails with the crane rail measuring device according to one of the preceding claims by being moved on the crane rail with energy provided by a power source (14) and drive from an electric motor (13), **characterized by** comprising the following steps:

a) Entering the number of measurements and measuring frequency data to the rail measuring device (10) via buttons (112) through a control panel (12),
b) Entering the number and frequency of measurements from the computer environment to the rail measuring device (10) by means of the Wi-Fi module (20),
c) detecting the crane rail angle change with an angle sensor (17),
d) detecting the distance traveled on the crane rail by means of an encoder (15),
e) transferring the angle data and distance traveled information to USB via a USB connection (19),
f) transferring the angle data and distance traveled information to the computer environment via a Wi-Fi module (20),
g) processing the data written on USB or transferred via Wi-Fi according to a mathematical model to calculate the height change and lateral change values.

**10.** The rail measuring method according to claim 9, **characterized in that** the first angle data on the rail is detected by an acceleration sensor located in a microprocessor (16).

**11.** The rail measuring method according to claim 9, **characterized in that** if an IMU sensor is used as the angle sensor (17), the first angle data on the rail is detected by an acceleration sensor located in the IMU sensor.

**12.** The rail measuring method according to claim 9, **characterized in that** measurement is preferably performed with a maximum accuracy of 0.02 mm with the said angle sensor (17).

**Patentansprüche**

**1.** Kranschienenmessvorrichtung (10) zum Detektieren der unregelmäßigen Höhen und seitlichen Verschiebungen in den Schienen, indem sie auf der Kranschiene mit Energie, die durch eine Leistungsquelle (14) bereitgestellt wird, und Antrieb von einem Elektromotor (13) bewegt wird, **dadurch gekennzeichnet, dass sie Folgendes umfasst;** mindestens einen Winkelsensor (17), der die Winkeländerung der Schiene detektiert, einen Codierer (15), um zu messen, wie weit die Schienenmessvorrichtung (10) auf der Schiene gefahren ist, und um die Verlagerungsdaten zu empfangen, und einen Mikroprozessor (16), der die Daten von den Sensoren steuert, indem er die Schienenmessvorrichtung (10) steuert.

**2.** Schienenmessvorrichtung (10) nach Anspruch 1, **dadurch gekennzeichnet, dass sie Folgendes umfasst;** einen Objektsensor (18), der ermöglicht, dass die Schienenmessvorrichtung (10) angehalten wird, wenn sich ein unerwünschtes Objekt auf der Schiene befindet.

**3.** Schienenmessvorrichtung (10) nach Anspruch 1, **dadurch gekennzeichnet, dass** der Mikroprozessor (16) einen Beschleunigungssensor zum Detektieren des ersten Winkels der Schiene umfasst.

**4.** Schienenmessvorrichtung (10) nach Anspruch 1, **dadurch gekennzeichnet, dass sie Folgendes umfasst;** eine USB-Verbindung (19) zum Übertragen der durch den Winkelsensor (17), den Codierer (15) und den Mikroprozessor (16) detektierten Informationen zu Winkelwerten und gefahrener Strecke an die externe Umgebung.

**5.** Schienenmessvorrichtung (10) nach Anspruch 1, **dadurch gekennzeichnet, dass sie Folgendes umfasst;** ein Wi-Fi-Modul (21) zum Übertragen der durch den Winkelsensor (17), den Codierer (15) und den Mikroprozessor (16) detektierten Informationen zu Winkelwerten und gefahrener Strecke an die externe Umgebung.

**6.** Schienenmessvorrichtung (10) nach Anspruch 1, **dadurch gekennzeichnet, dass** der Winkelsensor (17) ein Neigungssensor oder ein IMU-Sensor ist.

**7.** Schienenmessvorrichtung (10) nach Anspruch 1, **dadurch gekennzeichnet, dass** die Leistungsquelle (14) bevorzugt eine Li-Ionen-Batterie ist.

**8.** Schienenmessvorrichtung (10) nach Anspruch 1, **dadurch gekennzeichnet, dass** der Elektromotor (13) bevorzugt ein Gleichstrommotor ist.

**9.** Kranschienenmessverfahren zum Detektieren der unregelmäßigen Höhen und seitlichen Verschiebungen in den Schienen mit der Kranschienenmessvorrichtung nach einem der vorhergehenden Ansprüche, indem sie auf der Kranschiene mit Energie, die durch eine Leistungsquelle (14) bereitgestellt wird, und Antrieb von einem Elektromotor (13) bewegt wird, **dadurch gekennzeichnet, dass** es die folgenden Schritte umfasst:

a) Eingeben der Anzahl von Messungen und Messfrequenzdaten in die Schienenmessvorrichtung (10) über Tasten (112) durch ein Bedienfeld (12),
b) Eingeben der Anzahl und Häufigkeit von Messungen aus der Computerumgebung in die Schienenmessvorrichtung (10) mittels des Wi-Fi-Moduls (20),
c) Detektieren der Kranschienenwinkeländerung mit einem Winkelsensor (17),
d) Detektieren der auf der Kranschiene gefahrenen Strecke mittels eines Codierers (15),
e) Übertragen der Informationen zu Winkeldaten und gefahrener Strecke über eine USB-Verbindung (19) an USB,
f) Übertragen der Informationen zu Winkeldaten und gefahrener Strecke über ein Wi-Fi-Modul (20) an die Computerumgebung,
g) Verarbeiten der auf USB geschriebenen oder über Wi-Fi übertragenen Daten gemäß einem mathematischen Modell, um die Werte der Höhenänderung und seitlichen Änderung zu berechnen.

**10.** Schienenmessverfahren nach Anspruch 9, **dadurch gekennzeichnet, dass** die ersten Winkeldaten auf der Schiene durch einen in einem Mikroprozessor (16) angeordneten Beschleunigungssensor detektiert werden.

**11.** Schienenmessverfahren nach Anspruch 9, **dadurch gekennzeichnet, dass,** falls ein IMU-Sensor als der Winkelsensor (17) verwendet wird, die ersten Winkeldaten auf der Schiene durch einen in dem IMU-Sensor angeordneten Beschleunigungssensor detektiert werden.

**12.** Schienenmessverfahren nach Anspruch 9, **dadurch gekennzeichnet, dass** die Messung bevorzugt mit einer maximalen Genauigkeit von 0,02 mm mit dem Winkelsensor (17) durchgeführt wird.

**Revendications**

**1.** Dispositif de mesure de rail de grue (10) destiné à détecter les hauteurs irrégulières et les décalages latéraux dans les rails en étant déplacé sur le rail de grue au moyen d'une énergie fournie par une source d'alimentation (14) et d'un entraînement provenant d'un moteur électrique (13), **caractérisé en comprenant** ; au moins un capteur d'angle (17) qui détecte le changement d'angle du rail, un codeur (15) pour mesurer la distance parcourue par le dispositif de mesure de rail (10) sur le rail et pour recevoir les données de déplacement, et un microprocesseur (16) qui commande les données en provenance des capteurs en commandant le dispositif de mesure de rail (10).

**2.** Dispositif de mesure de rail (10) selon la revendication 1, **caractérisé en comprenant** ; un capteur d'objet (18) qui permet d'arrêter le dispositif de mesure de rail (10) lorsqu'un objet indésirable se trouve sur le rail.

**3.** Dispositif de mesure de rail (10) selon la revendication 1, **caractérisé en ce que** ledit microprocesseur (16) comprend un capteur d'accélération pour détecter le premier angle du rail.

**4.** Dispositif de mesure de rail (10) selon la revendication 1, **caractérisé en comprenant** ; une connexion USB (19) destinée à transférer les valeurs d'angle et les informations de distance parcourue détectées par ledit capteur d'angle (17), ledit codeur (15) et ledit microprocesseur (16) vers l'environnement externe.

**5.** Dispositif de mesure de rail (10) selon la revendication 1, **caractérisé en comprenant ;** un module Wi-Fi (21) destiné à transférer les valeurs d'angle et les informations de distance parcourue détectées par ledit capteur d'angle (17), ledit codeur (15) et ledit microprocesseur (16) vers l'environnement externe.

**6.** Dispositif de mesure de rail (10) selon la revendication 1, **caractérisé en ce que** ledit capteur d'angle (17) est un capteur d'inclinaison ou un capteur IMU.

**7.** Dispositif de mesure de rail (10) selon la revendication 1, **caractérisé en ce que** ladite source d'alimentation (14) est de préférence une batterie Li-Ion.

**8.** Dispositif de mesure de rail (10) selon la revendication 1, **caractérisé en ce que** ledit moteur électrique (13) est de préférence un moteur CC.

**9.** Procédé de mesure de rail de grue destiné à détecter les hauteurs irrégulières et les décalages latéraux dans les rails au moyen du dispositif de mesure de rail de grue selon l'une des revendications précédentes en étant déplacé sur le rail de grue au moyen d'une énergie fournie par une source d'alimentation (14) et d'un entraînement provenant d'un moteur électrique (13), caractérisé en comprenant les étapes suivantes :

a) entrée du nombre de mesures et des données de fréquence de mesure dans le dispositif de mesure de rail (10) par le biais de boutons (112) par l'intermédiaire d'un panneau de commande (12),
b) entrée du nombre et de la fréquence de mesures à partir de l'environnement informatique dans le dispositif de mesure de rail (10) au moyen du module Wi-Fi (20),
c) détection du changement d'angle de rail de grue avec un capteur d'angle (17),
d) détection de la distance parcourue sur le rail de grue au moyen d'un codeur (15),
e) transfert des données d'angle et des informations de distance parcourue à l'USB par l'intermédiaire d'une connexion USB (19),
f) transfert des données d'angle et des informations de distance parcourue à l'environnement informatique par l'intermédiaire d'un module Wi-Fi (20),
g) traitement des données écrites sur USB ou transférées par l'intermédiaire du Wi-Fi selon un modèle mathématique pour calculer les valeurs de changement de hauteur et de changement latéral.

**10.** Procédé de mesure de rail selon la revendication 9, **caractérisé en ce que** les premières données d'angle sur le rail sont détectées par un capteur d'accélération situé dans un microprocesseur (16).

**11.** Procédé de mesure de rail selon la revendication 9, **caractérisé en ce que** si un capteur IMU est utilisé en tant que capteur d'angle (17), les premières données d'angle sur le rail sont détectées par un capteur d'accélération situé dans le capteur IMU.

**12.** Procédé de mesure de rail selon la revendication 9, **caractérisé en ce que** la mesure est effectuée de préférence avec une précision maximale de 0,02 mm au moyen dudit capteur d'angle (17).

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TR 201202998
- TR 201906716
- US 20211088407 A1
- KR 20140131183 A
- CN 103063146 A
- JP H03177289 A
- JP 2008224419 A
- JP H05264261 A